# EUROPEAN PATENT SPECIFICATION

(11) **EP 1 697 170 B1**
(45) Date of publication and mention of the grant of the patent: **24.08.2011**
(21) Application number: 04805991.9
(22) Date of filing: 09.12.2004
(51) Int. Cl.: B60R 9/04

(54) **VEHICLE LOAD CARRIER**
FAHRZEUGLASTTRÄGER
SUPPORT DE CHARGE POUR VEHICULE

(30) Priority: 23.12.2003 GB 0329623
(43) Date of publication of application: 06.09.2006
(73) Proprietor: Thule Automotive Limited, Parkgate, Rotherham S62 6EF (GB)
(72) Inventor: VAN SMIRREN, Peter Richard, Norwell, Newark NG23 6JN (GB)
(74) Representative: Waddington, Richard
(86) International application number: PCT/GB2004/005171
(87) International publication number: WO 2005/061277

(56) References cited:
- AU-A- 4 708 085
- DE-A1- 4 137 707
- DE-A1- 19 931 173
- US-A- 5 090 605

## Description

The present invention relates to vehicle load carriers, and in particular, although not exclusively, to methods of attaching a roof rail to a vehicle.

Vehicle manufacturers commonly add fixings to the roof of a vehicle during the manufacturing process to enable the fitment of a load carrier, such as a roof rail or luggage rack, to the vehicle roof by an end user. These fixings are required to provide a secure and safe attachment of a load to the vehicle structure enabling compliance with International Vehicle Regulations.

The construction of the fixing is conventionally either a series of nuts or studs which are welded directly onto the vehicle body structure, a metal bracket welded to the body structure, a metal bracket with tapped holes sandwiched, either fixed or free moving, between parts of the body structure, or a series of threaded rivets fixed into the body structure. All these examples are applied during the manufacture of the vehicle. Fixings are normally fitted in the welded joint between the roof panel and the body side outer panel (known as the roof ditch) and covered with a trim finisher to give a good appearance. Occasionally the fixings are fitted inside the door recess area or on a reinforced area of the roof panel. An example is given by the AU 4708085 A.

The cost of providing these fixings on every single vehicle is significant, particularly when only a small percentage of end users, typically in the range of 5% to 15%, actually utilise this facility. The cost per vehicle is typically in the range of US $5 to US $10. However, the market expects that the vehicle manufacturer makes provision for the end user to have this facility, when required.

It is one aim of embodiments of the present invention to address the above problems.

According to the first aspect of the present invention, there is provided a method of attaching a load carrier fixing member to a vehicle, the method comprising applying adhesive to the vehicle roof and/or the fixing member, and attaching the fixing member to the vehicle, for subsequent attachment of a load carrier to the fixing member whereby

, the fixing member comprises a surface for adhering to the vehicle, the surface for adhering to the vehicle comprises at least one undercut and/or dovetail. Preferably the surface fow adhering to the vehicle is indented.

Preferably, a load carrier for attaching to the load carrier fixing is a roof rail or roof rack. A luggage box, bicycle rack, or any apparatus adapted to carry loads on an exterior of a vehicle may be secured to the load carrier.

The load carrier may be attached directly to one or more fixing members or a roof rail may be secured to one or more fixing members, with the load carrier being attached to the roof rail.

A fixing member trim finisher may be attached to a non adhered side of the fixing member, the fixing member trim finisher may be removable.

Advantageously, the fixing member may also be a trim finisher, which may extend substantially along the length of a roof ditch in which the fixing member is secured.

The fixing member may comprise at least one gap hider. Preferably the at least one gap hider is positioned between the fixing member and the vehicle body roof.

The method may further comprise pre-treating the vehicle, which may include cleaning a part of the vehicle to be worked on, and/or the use of an abrasive material. Advantageously, the use of an abrasive material on the vehicle surface increases the surface roughness of the area to be adhered to and, hence, increases the strength of the adhesion between the load carrier fixing and the vehicle. Examples of abrasive material are sandpaper, glass paper, emery glass, wire wool, or the like.

The adhesive may be an acrylic adhesive.

Preferably, the method comprises allowing the adhesive to cure.

The fixing member may be secured in position using one or more locating members, which is/are preferably shaped to hold the fixing member in the required position relative to the vehicle roof to receive a load carrier.

Preferably, the locating member comprises attachment means for attachment of the fixing member to the locating member.

According to a third aspect of the invention, there is provided a kit for fitting a load carrier fixing to a vehicle, the kit comprising a fixing member as defined in the first aspect or the second aspect, and adhesive.

The kit may include a locating member.

According to a fourth non-claimed aspect of the invention a fixing member for a vehicle load carrier attachment comprises an adhesive receiving portion and a load carrier fixing portion, wherein the load carrier fixing portion is operable to receive a fixing element of the vehicle load carrier attachment.

The adhesive receiving portion may incorporate at least one recess adapted to receive adhesive. The at least one recess advantageously increases the surface area of contact between adhesive applied to the adhesive receiving portion and the adhesive receiving portion.

The adhesive receiving portion may incorporate multiple recesses and/or projections. The adhesive receiving portion may incorporate keying elements to receive adhesive.

The adhesive receiving portion and the load carrier fixing portion may be separate parts. The adhesive receiving portion may be a locating portion having roof engaging projections, preferably operable to locate the locating portion relative to a roof recess. The roof engaging projections may be lower and/or lateral projections.

For a better understanding of the invention, and to show how embodiments of the same may be carried into effect, reference will now be made, by way of example, to the accompanying diagrammatic drawings, in which:-
Figure 1 shows a schematic perspective view of a vehicle, showing the position of a load carrier fixing;
Figure 2 shows an enlarged schematic view of the load carrier fixing;
Figure 3 shows a schematic partial cross-sectional view of the load carrier fixing attached to the vehicle;
Figure 4 shows a schematic cross-sectional view of a second embodiment of load carrier fixing showing an attached load carrier and fixing screw;
Figure 5 shows a schematic cross-sectional view of a third embodiment of load carrier fixing attached to a car roof;
Figure 6 shows a schematic cross-sectional view of a further embodiment of load carrier fixing incorporating a locating member; and
Figure 7 shows a partial perspective view of the locating member shown in Figure 6.

It would be advantageous to reduce the significant waste of preparing every vehicle for receiving a roof mounted load carrier fixing by only applying the fixings on demand, ie when the end user first requires their use. However, a problem arises in applying an adequate fixing system to the vehicle after it has left the manufacturing facility, without affecting the vehicle warranty. For example, it is preferred not to weld or drill the vehicle roof after it has been painted, as it destroys a corrosion protection system of the vehicle.

It has been realised by the present inventor that a fixing member for a load carrier may be secured to a vehicle with adhesive, whilst still having sufficient strength for safety purposes, but also being easily retrofitted. The integrity of the corrosion protection system is not affected.

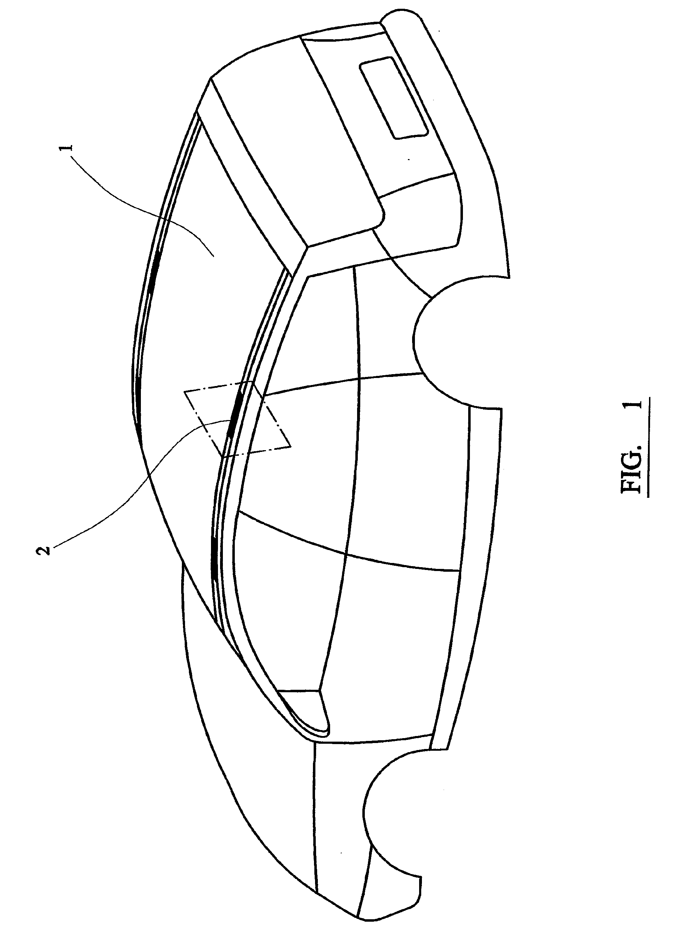

Referring to figure 1, there is shown a vehicle roof 1, the vehicle roof 1 having a recess 2 close to the edge of vehicle roof 1 for the purpose of accepting a vehicle load carrier fixing device.

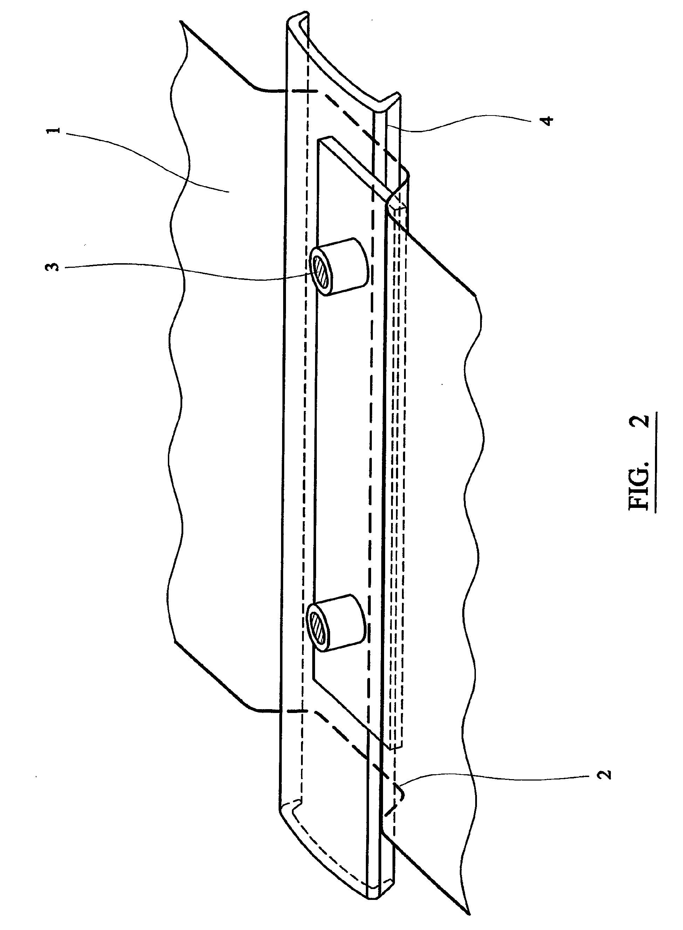

A load carrier, such as a roof rack or roof box may be secured either direct to fixings provided in the recess 2 or to roof rails that are themselves fixed in the recess. Referring to figure 2, there is shown the vehicle roof 1 having a fixing member 3 attached thereto, and a trim finisher 4 secured over the fixing member 3. The fixing member 3 may be made of various materials, such as metal or polymer, and may be manufactured as a plate, a stamped pressing, an extrusion, a casting, a forging, by fabrication, injection moulding, by machining part thereof or a combination with any other proceeding.

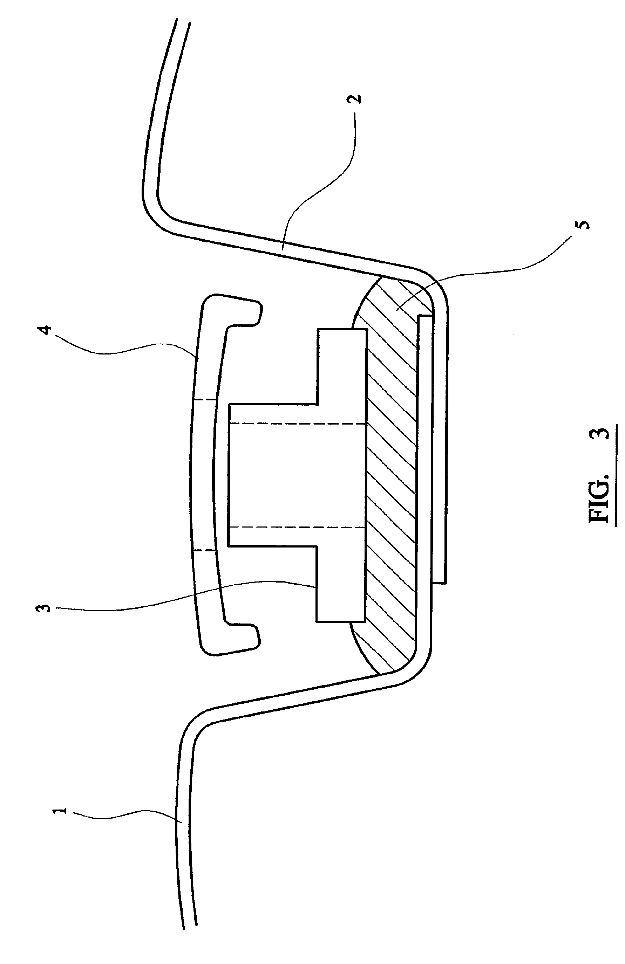

Referring to figure 3, there is shown a cross-sectional view of the vehicle roof 1 with the recess 2 containing adhesive 5, and the fixing member 3 secured in position by the adhesive 5. A trim finisher 4 may be attached to a non-adhered side of the fixing member 3. The adhesive is located in the bottom of the recess 2. The fixing member 3 has a smooth lower face. The trim finisher may be placed over the fixing member 3 when it is not in use. A plurality of the fixing members 3 are secured in the recess 2, to provide sufficient location points for a roof rail or load carrier. A recess is also present on an opposite side of the vehicle roof, as is usual and the recess is treated in the same way, by application of fixing members 3.

Where subsequent embodiments have the same parts as the above embodiment the same reference numerals are used.

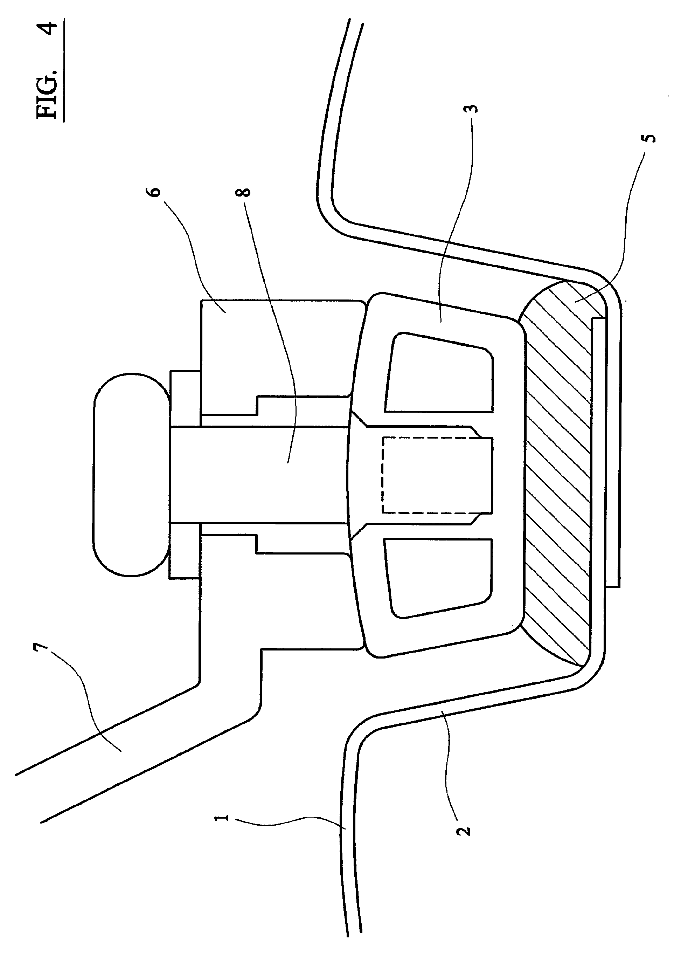

Referring to figure 4, there is shown a cross-sectional view of a second embodiment of fixing member 3 secured to the vehicle roof, in the recess 2. The fixing screw 8 is placed to fix a roof rail foot or load carrier foot 6 to the fixing member 3, the load carrier foot 6 forming part of a load carrier 7 (shown partially). In this example the fixing member doubles as the trim finisher of the previous embodiment. This example extends along the length of the ditch 2, unlike the fixing member 3 shown in Figures 2 and 3, which is a short piece.

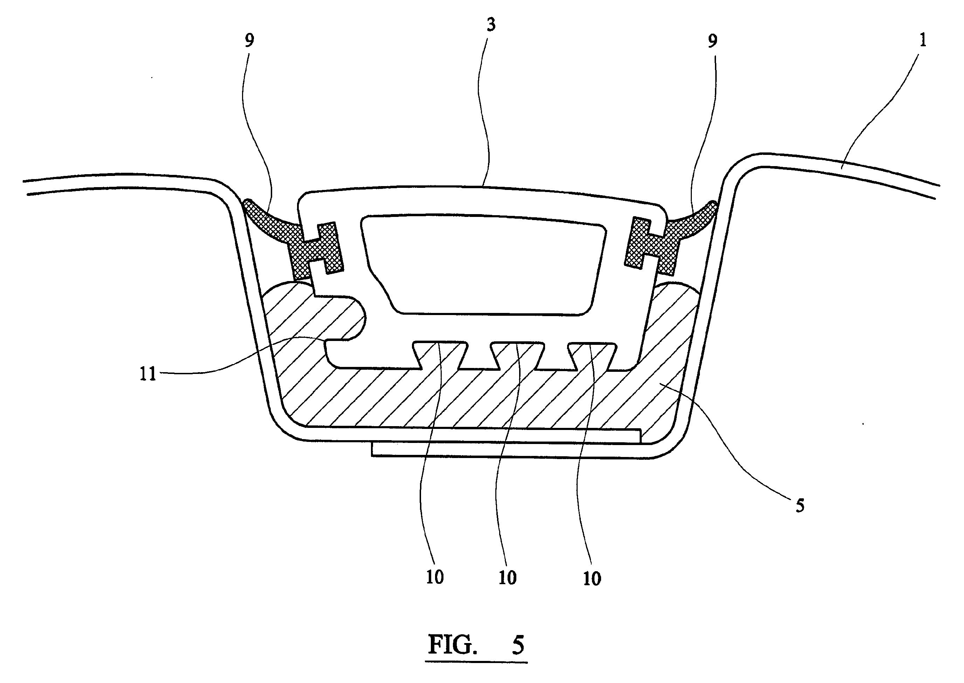

Referring to figure 5, there is shown a cross-sectional view of a third embodiment fixing member 3, which fixing member 3 comprises gap hiders 9, which prevent the entry of grit and dirt in to the recess 2. The fixing member 3 also includes dovetails 10 and protrusions 11. The dovetails 10 and protrusions 11 provide greater surface area for adhesion. Also, the reliance on peel strength in the embodiment is reduced, because the fixing member 3 can less easily peel from the adhesive 5 than would be the case if no dovetails 10/protrusions 11 were provided.

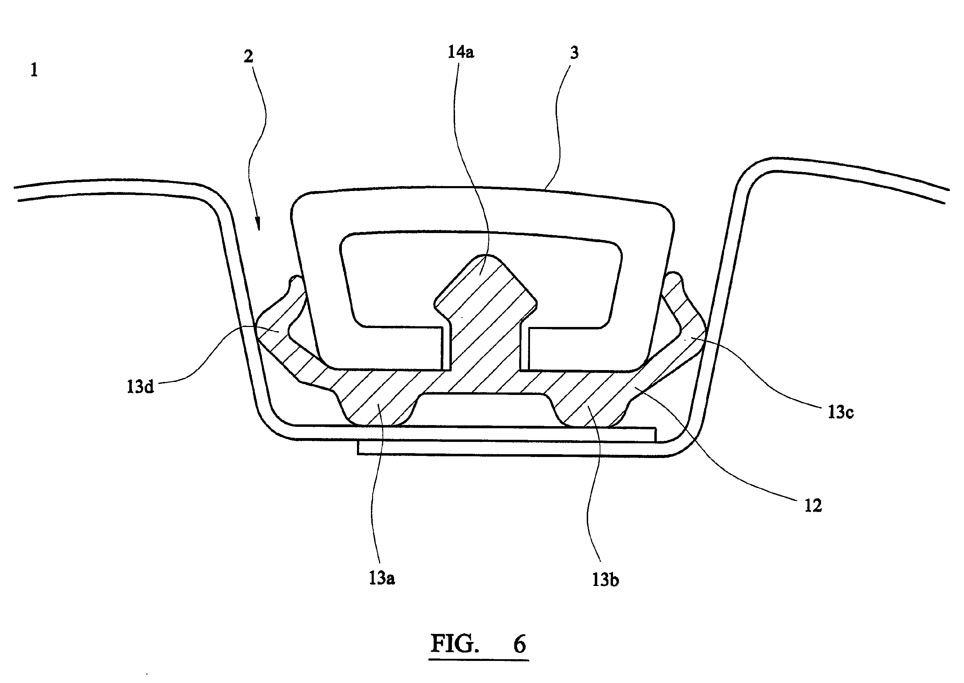

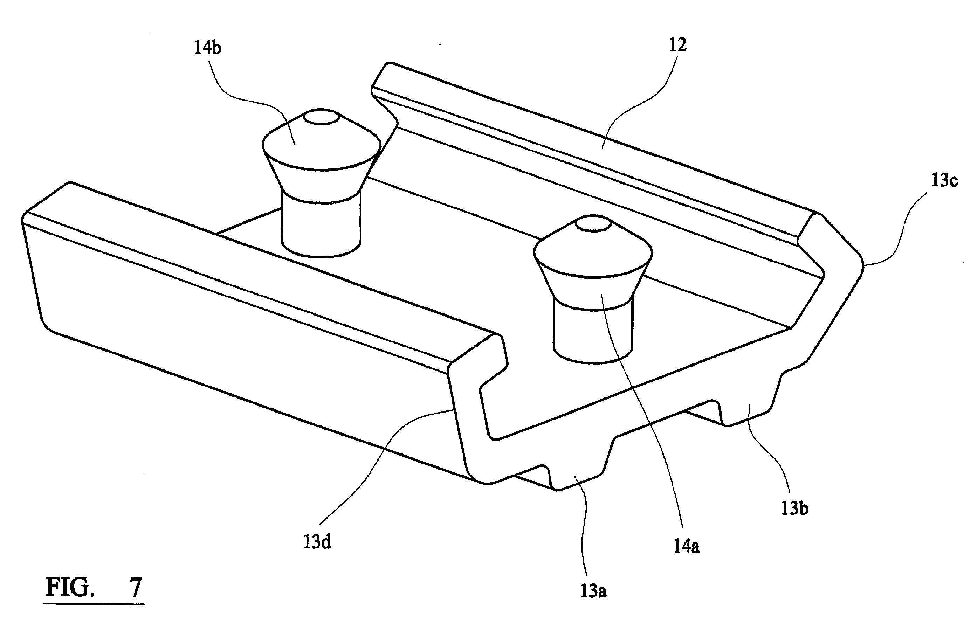

Referring to figures 6 and 7, there is shown a fourth embodiment of load carrier fixing which uses a series of locating members 12 which are secured to the fixing member 3 at spaced locations by a snap fitting. The fixing member 3, which is as long as the recess 2 (i.e. up to approximately 3m, defined by the particular vehicle), is then put in position in the recess 2 after adhesive has been applied to the recess 2 and/or the parts of the fixing member 3 that will not touch the locating members 12. The locating members 12 are left in position. The locating member 12 comprises roof-engaging elements 13a, b, c and d. The roof-engaging elements 13 a/b engage the base of the recess 2 and the roof-engaging elements 13c/d engage side walls of the recess 2. The roof-engaging elements 13a/b support the locating member 12.

All of the embodiments of fixing member 3 are operable to receive a load carrier foot 6 as shown in Figure 4.

The features for attaching the load carrier foot 6 (forming part of the load carrier 7) to the fixing member 3 may be manufactured directly into the fixing member 3 or incorporated within the fixing member 3. The attachment of the load carrier foot 6 to the fixing member 3 may employ a male or female thread, clamping jaws, a hook or loop arrangement, a T-stud arrangement, or any reasonable alternative method of attachment may be employed.

Advantageously the novelty of the load carrier fixing is that, in using adhesive 5 to attach the fixing member 3 to the vehicle roof 1, it may be fitted at any time during the lifetime of the vehicle without affecting the vehicle warranty. Fitting the fixing member would typically entail removal of a trim finisher if already present, cleaning and preparation of the vehicle roof 1 surface (with abrasive paper for example), application of the adhesive 5 to the fixing member 3 or the vehicle roof 1, and attaching the fixing member 3 to the vehicle roof 1.

The fixing member 3 may be incorporated into a new trim finisher 4 to suit the style of the vehicle, or an existing trim may be replaced in the case of the embodiment shown in Figures 2 and 3. The fixing member 3 may itself be of a sufficiently high standard to not require an additional trim finisher 4, such as the embodiments shown in Figures 4, 5 and 6.

The load carrier 7 is removable leaving visible an opening for receiving the fixing 8 to be attached to the fixing member 3. The opening may be protected by an additional, or removable part. For example, a plastic grub screw may be used to protect an otherwise visible female thread from dirt and foreign objects.

The bonding technique may also be applied to the assembly of a roof rail on a vehicle assembly production line, either supplementing or replacing a conventional mechanical fixing method. The use of adhesive in combination with mechanical fixings with a flush fitting roof rail may reduce the number of fixings required while reducing the likelihood of damage to the body and increasing the stiffness of the complete system.

For example, a c-track style roof rail, where the rail sits very close to the vehicle along its entire length particularly less than 5mm or so, requires closely staged mechanical fixings, typically every 300mm to 400mm, if its entire length is to be available for load carrier attachment. Some of these fixings may only be required to ensure that contact between the roof rail and the body of the vehicle is prevented under dynamic loading conditions. Using an adhesive to fix the roof rail at a controlled position relative to the vehicle body allows the number of mechanical fixings to be greatly reduced.

Depending upon the performance requirements, and the geometry of the roof element, it may be possible to not use any mechanical fixings.

The type of adhesive 5 used is dependent on the manufacturing tolerances as the components have been joined together. If a small component has been bonded to the vehicle roof, then the relevant shape intolerances of the component and vehicle allow a thin film of high performance adhesive to be used, such as a 2-component acrylic adhesive, such as a 3M (RTM) DP810. The adhesive must be able to secure the fixing member according to legislative requirements throughout the service life of the components. A larger component, for example, a full length roof rail, is likely to have significant gaps between itself and the vehicle body due to allowable manufacturing variation, and so a "gap filling" adhesive would be preferred. For this latter application, urethane based adhesive such as dynatron d-503mf, similar to that used for attaching fixed window glass to car bodies, would be preferred. This type of adhesive has a high viscosity or "high decking", so that large gaps can be accommodated. Other adhesive types may be used as appropriate depending on the circumstances.

On this basis, the locating member 12, typically produced in stamped, extruded or injection moulded synthetic rubber, may be integrated into the roof rail design in order to control the gap between the roof rail and the vehicle body within the effective range of the adhesive, typically 3 to 6mm.

Well executed bonded joints are very effective in many loading directions. However, peel strength is usually the weakest property. Pre-treatment of the paintwork may be necessary to ensure a good key for the adhesive.

The leading edge of the bracket may be hooked under part of the car roof to prevent peel. It is possible to create a feature in the roof ditch when pressing the vehicle roof panel. This feature could provide a "hook" in the roof ditch under which the edge of the bracket (ideally the forward most or leading edge) could be located, reducing the chance of the joint peeling.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

## Claims

1. A method of attaching a load carrier fixing member to a vehicle, the method comprising applying adhesive to the vehicle roof and/or the fixing member, and attaching the fixing member to the vehicle, the fixing member being adapted to subsequently be attached to a load carrier, the fixing member comprising a surface for adhering to the vehicle, **characterised in that** the surface for adhering to the vehicle comprises at least one undercut and/or dovetail.

2. A method as claimed in claim 1, wherein the surface for adhering to the vehicle is indented.

3. A method as claimed in any one of the preceding claims, wherein a load carrier for attaching to the load carrier fixing member is a roof rail or roof rack.

4. A method as claimed in claim 3, wherein the load carrier is a roof rack and the load carrier fixing member is a roof rail.

5. A method as claimed in any one of the preceding claims, wherein the load carrier is attachable directly to one or more fixing members.

6. A method as claimed in any one of the preceding claims, wherein a fixing member trim finisher is attached to a non adhered side of the fixing member.

7. A method as claimed in claim 6, wherein the fixing member trim finisher is removably attached to the fixing member.

8. A method as claimed in any one of the preceding claims, wherein the fixing member comprises at least one gap hider.

9. A method as claimed in claim 8, wherein the at least one gap hider is positioned between the fixing member and the vehicle body roof.

10. A method as claimed in any one of the preceding claims, wherein the method further comprises pre-treating the vehicle, including cleaning a part of the vehicle to be worked on, and/or the use of an abrasive material.

11. A method as claimed in any one of the preceding claims, wherein the fixing member is secured in position using one or more locating members, which is/are shaped to hold the fixing member in the required position relative to the vehicle roof to receive a load carrier.

12. A method of attaching a load carrier fixing member to a vehicle, the method comprising applying adhesive to the vehicle roof and/or said fixing member, and attaching said fixing member to the vehicle, the surface for adhering to the vehicle comprises at least one undercut and/or dovetail.

13. A method as claimed in claim 12, wherein the load carrier fixing member is a roof rail.

14. A method as claimed in claims 12, wherein the load carrier fixing member is a trim finisher.

15. A kit for fitting a load carrier fixing to a vehicle, the kit comprising a fixing member , the fixing member being adapted to subsequently be attached to a load carrier. The fixing member comprising a surface far adhering to the vehicle, wherely said surface comprises at least ane undercut and/or dovetail as defined in any one of the preceding claims, and adhesive.

16. A fixing member for a vehicle load carrier attachment, the fixing member comprising an adhesive receiving portion, a load carrier fixing portion, and a surface for adhering to the vehicle, the surface comprising at least one undercut and/or dovetail, wherein the load carrier fixing portion is operable to receive a fixing element of the vehicle load carrier attachment.

17. A fixing member as claimed in claim 16, wherein the adhesive receiving portion is a locating portion having roof engaging projections, which are operable to locate the locating portion relative to a roof recess.

18. A fixing member as claimed in claims 16 or 17, wherein a portion of said fixing member is adapted to be hooked under a part of the vehicle roof.

## Patentansprüche

1. Verfahren zur Befestigung eines Lastträgerbefestigungsglieds an einem Fahrzeug, wobei das Verfahren Aufbringen von Klebstoff auf das Fahrzeugdach und/oder das Befestigungsglied und Befestigen de s Befestigungsglieds an dem Fahrzeug umfasst, wobei das Befestigungsglied dazu ausgeführt ist, anschließend an dem Lastträger befestigt zu werden, wobei das Befestigungsglied eine Fläche zum Ankleben an das Fahrzeug umfasst, **dadurch gekennzeichnet, dass** die Fläche zum Ankleben an das Fahrzeug mindestens eine Hinterschneidung und/oder einen Schwalbenschwanz umfasst.

2. Verfahren nach Anspruch 1, wobei die Fläche zum Ankleben an das Fahrzeug gekerbt ist.

3. Verfahren nach einem der vorhergehenden Ansprüche, wobei ein Lastträger zur Befestigung an das Lastträgerbefestigungsglied ein Dachholm oder eine Dachreling ist.

4. Verfahren nach Anspruch 3, wobei der Lastträger ein Dachholmist und das Lastträgerbefestigungsglied eine Dachreling ist.

5. Verfahren nach einem der vorhergehenden Ansprüche, wobei der Lastträger direkt an einem oder mehreren Befestigungsgliedern befestigt werden kann.

6. Verfahren nach einem der vorhergehenden Ansprüche, wobei ein Befestigungsgliedverkleidungselement an einer nicht geklebten Seite des Befestigungsglieds befestigt ist.

7. Verfahren nach Anspruch 6, wobei das Befestigungsgliedverkleidungselement lösbar an dem Befestigungsglied befestigt ist.

8. Verfahren nach einem der vorhergehenden Ansprüche, wobei das Befestigungsglied mindestens eine Spaltabdeckblende umfasst.

9. Verfahren nach Anspruch 8, wobei die mindestens eine Spaltabdeckblende zwischen dem Befestigungsglied un d dem Fahrzeugaufbaudach positioniert ist.

10. Verfahren nach einem der vorhergehenden Ansprüche, wobei das Verfahren weiterhin Vorbehandeln des Fahrzeugs umfasst, darunter Reinigen eines zu bearbeitenden Teils des Fahrzeugs und/oder Verwenden eines Schleifmaterials.

11. Verfahren nach einem der vorhergehenden Ansprüche, wobei das Befestigungsglied unter Verwendung eines oder mehrerer Positionierungsglieder in Position befestigt wird, wobei das oder die Positionierungsglieder dazu geformt ist/sind, das Befestigungsglied in der erforderlichen Position bezüglich des Fahrzeugdachs zu halten, um einen Lastträger aufzunehmen.

12. Verfahren zur Befestigung eines Lastträgerbefestigungsglieds an einem Fahrzeug, wobei das Verfahren Aufbringen von Klebstoff auf das Fahrzeugdach und/oder das Befestigungsglied und Befestigen des Befestigungsglieds an dem Fahrzeug umfasst, wobei die Fläche zum Ankleben an das Fahrzeug mindestens eine Hinterschneidung und/oder einen Schwalbenschwanz umfasst.

13. Verfahren na c h Anspruch 12 , wo b e i das Lastträgerbefestigungsglied ein Dachholm ist.

14. Verfahren na c h Anspruch 12 , wo b e i das Lastträgerbefestigungsglied ein Verkleidungselement ist.

15. Ausrüstung zur Anordnung einer Lastträgerbefestigung an einem Fahrzeug, wobei die Ausrüstung ein Befestigungsglied nach einem der vorhergehenden Ansprüche umfasst, wobei das Befestigungsglied da z u ausgeführt ist, anschließend an einem Lastträger befestigt zu werden, wobei das Befestigungsglied eine Fläche zum Ankleben an das Fahrzeug umfasst, wobei die Fläche mindestens eine Hinterschneidung und/oder einen Schwalbenschwanz umfasst, u n d einen Klebstoff umfasst.

16. Befestigungsglied für eine Fahrzeuglasträgerhalterung, wobei das Befestigungsglied ei n e n Klebstoffaufnahmeteil, einen Lastträgerbefestigungsteil und eine Fläche zum Ankleben an das Fahrzeug umfasst, wobei die Fläche mindestens eine Hinterschneidung und/oder einen Schwalbenschanz umfasst , wo b e i der Lastträgerbefestigungsteil dazu fungiert, ein Befestigungselement der Fahrzeuglastträgerhalterung aufzunehmen.

17. Befestigungsglied nach Anspruch 16, wobei der Klebstoffaufnahmeteil ei n Positionierteil mit Dacheingriffsvorsprüngen ist, die dazu fungieren, den Positionierteil bezüglich einer Dachaussparung zu positionieren.

18. Befestigungsglied nach Anspruch 16 oder 17, wobei ein Teil des Befestigungsglieds dazu ausgeführt ist, unter einen Teil des Fahrzeugsdachs gehakt zu werden.

## Revendications

1. Procédé pour attacher un organe de fixation d'un support de charge à un véhicule, le procédé comprenant les étapes consistant à appliquer de l'adhésif au toit du véhicule et/ou à l'organe de fixation, et à attacher l'organe de fixation au véhicule, l'organe de fixation étant prévu pour être subséquemment attaché à un support de charge, l'organe de fixation comprenant une surface pour adhérer au véhicule, **caractérisé en ce que** la surface pour adhérer au véhicule comprend au moins une contre-dépouille et/ou une queue d'aronde.

2. Procédé selon la revendication 1, dans lequel la surface pour adhérer au véhicule est dentelée.

3. Procédé selon l'une quelconque des revendications précédentes, dans lequel un support de charge devant être attaché à l'organe de fixation de support de charge est un rail de toit ou une galerie de toit.

4. Procédé selon la revendication 3, dans lequel le support de charge est une galerie de toit et l'organe de fixation de support de charge est un rail de toit.

5. Procédé selon l'une quelconque des revendications précédentes, dans lequel le support de charge peut être attaché directement à un ou plusieurs organes de fixation.

6. Procédé selon l'une quelconque des revendications précédentes, dans lequel une finition de garniture d'organe de fixation est attachée à un côté non adhéré de l'organe de fixation.

7. Procédé selon la revendication 6, dans lequel la finition de garniture d'organe de fixation est attachée de manière amovible à l'organe de fixation.

8. Procédé selon l'une quelconque des revendications précédentes, dans lequel l'organe de fixation comprend au moins un dispositif de dissimulation d'interstice.

9. Procédé selon la revendication 8, dans lequel l'au moins un dispositif de dissimulation d'interstice est positionné entre l'organe de fixation et le toit de la caisse du véhicule.

10. Procédé selon l'une quelconque des revendications précédentes, dans lequel le procédé comprend en outre le prétraitement du véhicule, y compris le nettoyage d'une partie du véhicule à soumettre aux travaux, et/ou l'utilisation d' u n matériau abrasif.

11. Procédé selon l'une quelconque des revendications précédentes, dans lequel l'organe de fixation est fixé en position en utilisant un ou plusieurs organes de positionnement, qui est/sont formés de manière à retenir l'organe de fixation dans la position requise par rapport au toit du véhicule pour recevoir un support de charge.

12. Procédé pour attacher un organe de fixation de support de charge à un véhicule, le procédé comprenant les étapes consistant à appliquer de l'adhésif au toit du véhicule et/ou audit organe de fixation, et à attacher ledit organe de fixation au véhicule, la surface pour adhérer au véhicule comprenant au moins une contre-dépouille et/ou une queue d'aronde.

13. Procédé selon la revendication 12, dans lequel l'organe de fixation de support de charge est un rail de toit.

14. Procédé selon la revendication 12, dans lequel l'organe de fixation de support de charge est une finition de garniture.

15. Kit pour ajuster une fixation de support de charge sur un véhicule, le kit comprenant un organe de fixation, l'organe de fixation étant prévu pour être subséquemment attaché à un support de charge, l'organe de fixation comprenant une surface pour adhérer au véhicule, ladite surface comprenant au moins un e contre-dépouille et / o u un e queue d'aronde, tel que défini dans l'une quelconque des revendications précédentes, et de l'adhésif.

16. Organe de fixation pour une attache d'un support de charge de véhicule, l'organe de fixation comprenant une portion recevant de l'adhésif, une portion de fixation de support de charge, et une surface pour adhérer au véhicule, la surface comprenant au moins une contre-dépouille et/ou une queue d'aronde, la portion de fixation de support de charge pouvant servir à recevoir un élément de fixation de l'attache de support de charge du véhicule.

17. Organe de fixation selon la revendication 16, dans lequel la portion recevant de l'adhésif est une portion de positionnement ayant des saillies d'engagement avec le toit, qui peuvent servir à positionner la portion de positionnement par rapport à un retrait du toit.

18. Organe de fixation selon les revendications 16 ou 17, dans lequel une portion dudit organe de fixation est prévue pour être accrochée sous une partie du toit du véhicule.
